Europäisches Patentamt

**European Patent Office**

Office européen des brevets

(11) Publication number: **0 072 635**
**B1**

(12) **EUROPEAN PATENT SPECIFICATION**

(45) Date of publication of patent specification: **18.12.85**

(21) Application number: **82303941.7**

(22) Date of filing: **26.07.82**

(51) Int. Cl.⁴: **H 04 N 5/92,** G 11 B 5/09

(54) Methods of and apparatus for coding television signals.

(30) Priority: **14.08.81 GB 8124895**

(43) Date of publication of application:
**23.02.83 Bulletin 83/08**

(45) Publication of the grant of the patent:
**18.12.85 Bulletin 85/51**

(84) Designated Contracting States:
**AT DE FR GB IT NL**

(56) References cited:
**WO-A-81/02499**
**DE-A-2 921 892**
**DE-A-2 947 874**
**DE-A-3 027 329**
**GB-A-2 068 675**
**US-A-3 666 888**
**US-A-4 246 615**

**ELECTRONICS, February 5, 1976, New York,**
**GOLDBERG: "Digital techniques promise to**
**clarify the television picture", pages 94-100**

(73) Proprietor: **SONY CORPORATION**
**7-35 Kitashinagawa 6-Chome Shinagawa-ku**
**Tokyo 141 (JP)**

(72) Inventor: **Wilkinson, James Hedley**
**32 Droxford Crescent New Road**
**Tadley Near Basingstoke Hampshire (GB)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to methods of and apparatus for coding television signals. More particularly, the invention is concerned with the provision of synchronization and addressing for a digital television signal data block.

Recently there has been an increasing interest in the use of digital techniques for television signals. Such techniques are, for example, used in some video tape recording arrangements where an incoming television signal to be recorded is sampled, the samples are pulse code modulation coded into digital form, the digital data signals are recorded and subsequently reproduced by a video tape recorder, the reproduced digital data signals are decoded, and the decoded signals are used to form an analog signal corresponding to the original television signal.

For the purpose of recording it is usual to assemble the digital signals into blocks and to associate with each block synchronizing and address signals for use in identifying and decoding the digital data signals after reproduction. Moreover, it is known to use balanced words for recording, to minimise dc components. See, for example, German Offenlegungsschrift DE 29 47 874 A1.

According to the present invention there is provided a method of coding a television signal, the method comprising:

sampling the television signal periodically to provide a sequence of samples;

coding each said sample to form a data word; and

assembling said data words into blocks of data words;

characterised by:

providing for each said data block a plurality of 6-bit address words;

converting each said 6-bit address word into a respective balanced 8-bit address word;

providing for each said data block at least one balanced synchronizing word; and

assembling said balanced synchronizing word or words and said balanced address words with the respective said data block.

A balanced 8-bit word is an 8-bit word selected from the group of seventy 8-bit words having four "0" and four "1". The use of balanced words results in a signal with a minimum dc component, which signal is suitable for magnetic tape recording and reproduction.

Preferably there are four said address words and two said synchronizing words, each said synchronizing word being a balanced 8-bit word preferably not among those used in converting each said 6-bit address word into a respective balanced 8-bit address word. Preferably the two synchronizing words are not identical.

According to the present invention there is also provided apparatus for coding a television signal, the apparatus comprising: .

means for sampling the television signal periodically to provide a sequence of samples;

a coder for coding each said sample to form a data word; and

a store for assembling said data words into blocks of data words;

characterized by:

means for providing each said data block with a plurality of 6-bit address words;

a coder for converting each said 6-bit address word into a respective balanced 8-bit address word;

means for providing each said data block with at least one balanced synchronizing word; and

a store for assembling said balanced synchronizing word or words and said balanced address words with the respective said data block.

The invention will now be described by way of example with reference to the accompanying drawings, in which:

Figure 1 indicates in outline the structure of synchronizing and address words to be associated with a data block;

Figure 2 is a chart showing 6-bit word to 8-bit word encoding used for the address words; and

Figure 3 shows in block form an embodiment of apparatus according to the invention.

Prior to recording on a video tape recorder, a television signal is converted into digital form by sampling the incoming television signal periodically to provide a sequence of samples, and each sample is then pulse code modulation coded to form an 8-bit data word. These data words are grouped into blocks of 128 data words. Six such blocks, that is 768 data words, represent one horizontal scan line of the television signal. In practice, each of these blocks is sub-divided into a pair of sub-blocks which are respectively supplied to the two heads of a pair of recording and reproducing heads. Fifty-five times six such blocks represent a so-called segment of one field of the television signal, and five or six such segments, depending upon whether the television signal is a 525-line system television signal such as NTSC, or a 625-line system television signal such as PAL, form a field of the television signal. It will be noted that this coding provides for more lines than the total number of active horizontal scan lines in one field of a 525 or 625-line system television signal field, the excess lines being used to provide check words, such as vertical parity words, for detecting and correcting errors in the reproduced data words. Moreover, if required, further provision may be made for error detection and correction and for error concealment, for example by shuffling the order of the data prior to recording and de-shuffling after reproduction.

However, it is also to be noted that in the embodiment to be described, it is preferred, although it is not essential, that the 8-bit data words are recorded and reproduced as 8-bit words, and are not, for example, encoded into balanced 10-bit words for recording. Thus, the data words for recording are unbalanced, that is to say do not include equal numbers of "0" and "1", so there is a residual direct current component. Whilst efforts are being made to improve the response of magnetic tape recorders to direct current components, it is still generally the case that the response is poor. In these circumstances, it is particularly important that the synchronizing and address words associated with each data block are secure, that is to say are resistant to error. This is because if a data word is lost or corrupted and the error detection and correction arrangements fail to effect a correction, the possibility of concealment still exists. Moreover, even if a data word is completely lost, this only affects a single sample point on the reproduced television picture. If, however, an address word is lost, this may mean that a whole block of data words must be discarded or concealed, with severe detriment to the reproduced television picture, and likewise loss of the synchronizing words may means total loss of the reproduced television picture.

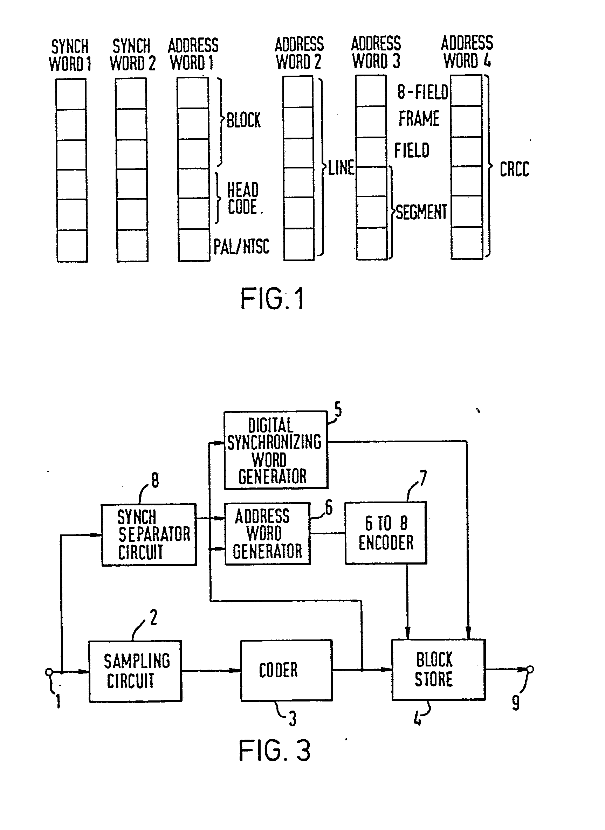

Referring to Figure 1, there is associated with each 128-word data block, two synchronizing words and four address words. As initially formed, each of the address words is a 6-bit word. The general structure is indicated in Figure 1 and will now be described in detail:

*Address Word 1*
First Three Bits
Block number in the range 0 to 5 with the most significant bit first.

Fourth and Fifth Bits
Head code to enable up to four magnetic recording and reproducing heads to be distinguished. The heads are designated A, B, C and D, and the coding is A = "00"; B = "01"; C = "10"; and D = "11".

Sixth Bit
PAL/NTSC identifier, or more precisely 625-line system signal/525-line system signal identifier. This bit is "0" or "1" depending on whether it is a 625 or a 525-line system signal.

*Address Word 2*
All Six Bits
Line number in the range 0 to 54 with the most significant bit first.

*Address Word 3*
First Bit
8-field identifier, this being 0 for fields 0, 1, 2 and 3.

Second Bit
Frame identifier, this being "0" for fields 0, 1, 4 and 5.

Third Bit
Field identifier, this being "0" for fields 0, 2, 4 and 6.

Fourth to Sixth Bits
Segment number in the range 0 to 5 for a 626- line system (PAL) and 0 to 4 for a 525-line system signal (NTSC). The most significant bit is first.

*Address Word 4*
All Six Bits
Cyclic redundancy check code to provide for error detection and possibly correction of the bits of the address words 1 to 3 on reproduction.

The two 8-bit synchronizing words are selectable, but are preferably not identical and should preferably be selected to have a bit pattern which cannot occur in any of the four address words when the 6-bit address words are converted into respective balanced 8-bit words selected from the group of seventy 8-bit words having four "0" and four "1", so as to provide a signal for magnetic recording which has a minimum direct current component. In one example the two synchronizing words are "01110001" and "10001110".

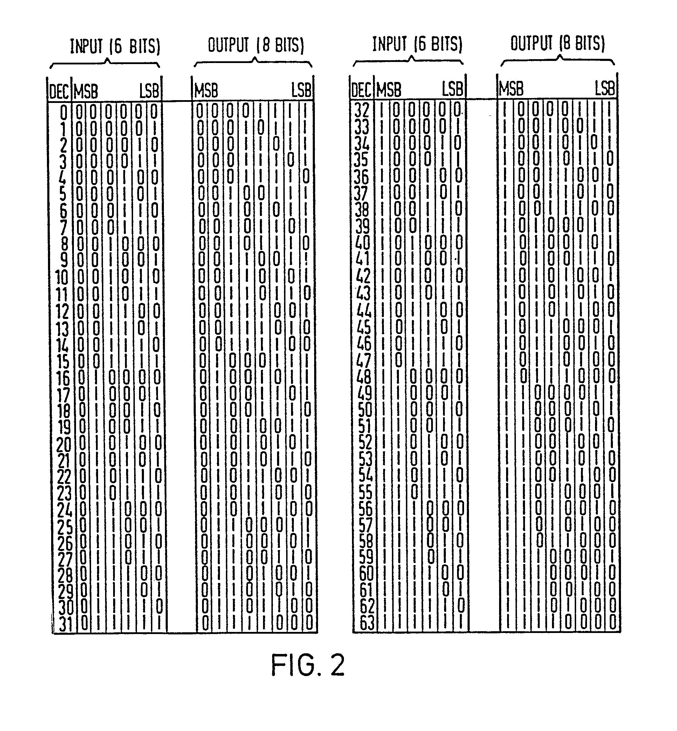

Figure 2 shows a scheme of encoding which has been used, although it will be realised that the precise relationship between the input 6-bit words and the output 8-bits is not critical. The decimal numbers included at the lefthand side of each column of input words are provided merely for reference, and the succeeding six binary digits indicate the formats of the input words, while the adjacent 8-bit words indicate the conversion effected on each individual 6-bit word. The two 8-bit combinations used for the synchronizing words are among those not used for encoding the 6-bit address words.

After reproduction, the 8-bit words are decoded to form the original 6-bit synchronizing and address words. It will be realised that this decoding step provides some measure of error detection, because a reproduced 8-bit word having a bit combination other than those shown in Figure 2 must be in error.

If at the beginning of reproduction of a signal the synchronizing words are in error, then the apparatus receiving the reproduced signal will simply fail to lock until such time as the correct pattern of bits forming the synchronizing words is reproduced and recognised. Once a sufficient sequence of synchronizing words has been so recognised, the apparatus will lock-in and flywheel over any random errors in subsequent synchronizing words. As the two synchronizing words together form a unique 16-bit pattern, the probability of the synchronizing words being wrongly identified as present when in fact they are not, is very small.

The arrangement of block number, followed by line number, followed by segment number in the address words also facilitate freewheeling over any errors in the address words, because at least during normal reproduction the order in which the respective numbers are expected to appear can be predicted. The head code is particularly useful in shuttle modes when the reproduced information is in incomplete and disjointed form, because it means that when a complete segment is satisfactorily reproduced, identification of the head code can enable the data relating to that segment to be placed in the correct part of a field store for subsequent reproduction to form the appropriate part of the television picture.

It will also be noticed that the structure of the address words described above includes a certain amount of redundancy. For example the segment numbering will identify whether the signal relates to a 625 or a 525-line system television signal, without the need for the PAL/NTSC identifier. However, this redundancy is deliberately included in order to simplify the address decoding operation and it also adds further security to the addressing, because some cross-checking is possible.

Figure 3 shows an embodiment of apparatus for performing the above-described encoding. An incoming analog television signal is supplied by way of an input terminal 1 to a sampling circuit 2 which supplies output samples to a coder 3 where each sample is pulsed code modulation coded to form an 8-bit data word. The data words are supplied to a block store 4 for assembly into blocks of 128 data words. The data words are also supplied to a digital synchronizing word generator 5 and an address word generator 6 which respectively generate the two 8-bit synchronizing words and the four 6-bit address words. The synchronizing words are supplied directly to the block store 4, and the address words are supplied to the block store 4 by way of an encoder 7 where they are encoded from 6-bit words to 8-bit words as described in connection with Figure 2. The incoming television signal is also supplied to a synch separator circuit 8, which supplies synch controls to the address word generator 6. In the block store 4, the data block of 128 8-bit data words is assembled, preceded by the two balanced 8-bit synchronizing words and the four balanced 8-bit address words. Each block so assembled is read out of the block store 4 for supply to an output terminal 9 which is connected, for example, to the input of a video tape recorder (not shown).

## Claims

1. A method of coding a television signal, the method comprising:

sampling (2) the television signal periodically to provide a sequence of samples;

coding (3) each said sample to form a data word; and

assembling (4) said data words into blocks of data words;

characterised by:

providing (6) for each said data block a plurality of 6-bit address words;

converting (7) each said 6-bit address word into a respective balanced 8-bit address word;

providing (5) for each said data block at least one balanced synchronizing word; and

assembling (4) said balanced synchronizing word or words and said balanced address words with the respective said data block.

2. A method according to claim 1 wherein there are four said address words and two said synchronizing words, each said synchronizing word being a balanced 8-bit word not included among those used in converting each said 6-bit address word into a respective balanced 8-bit address word.

3. A method according to claim 2 wherein said two synchronizing words are not identical.

4. A method according to any one of the preceding claims wherein said address words comprise block and television scan line numbers and a check code.

5. Apparatus for coding a television signal, the apparatus comprising:

means (2) for sampling the television signal periodically to provide a sequence of samples;

a coder (3) for coding each said sample to form a data word; and

a store (4) for assembling said data words into blocks of data words;

characterised by:

means (6) for providing each said data block with a plurality of 6-bit address words;

a coder (7) for converting each said 6-bit address word into a respective balanced 8-bit address word;

means (5) for providing each said data block with at least one balanced synchronizing word; and

a store (4) for assembling said balanced synchronizing word or words and said balanced address words with the respective said data block.

## Patentansprüche

1. Verfahren zum Codieren eines Fernsehsignals, umfassend

das periodische Abtasten (2) des Fernsehsignals zur Bereitstellung einer Sequenz von Abtastproben,

das Codieren (3) jeder Abtastprobe zur Bildung eines Datenwortes und

das Zusammensetzen (4) der Datenworte in Blöcke von Datenworten,

dadurch gekennzeichnet,

daß für jeden Datenblock mehrere 6-Bit-Adreßworte bereitgestellt (6) werden,

daß jedes 6-Bit-Adreßwort in ein entsprechendes ausgeglichenes 8-Bit-Adreßwort umgesetzt (7) wird,

daß für jeden Datenblock zumindest ein ausgeglichenes Synchronisierwort bereitgestellt (5) wird und

daß das mindestens eine ausgeglichene Synchronisierwort und die ausgegelichenen Adreßworte mit dem entsprechenden Datenblock zusammengesetzt (4) werden.

2. Verfahren nach Anspruch 1, bei dem vier Adreßworte und zwei Synchronisierworte verwendet werden, wobei jedes Synchronisierwort eine solches ausgeglichenes 8-Bit-Wort ist, welches in den für die Umsetzung jedes 6-Bit-Adreßwortes in ein entsprechendes ausgeglichenes 8-Bit-Adreßwort verwendeten 8-Bit-Worten nicht enthalten ist.

3. Verfahren nach Anspruch 2, bei dem die beiden Synchronisierworte nicht identisch sind.

4. Verfahren nach einem der vorhergehenden Ansprüche, bei dem die Adreßworte Block- und Fernsehabtastzeilennummern und einen Prüfcode umfassen.

5. Vorrichtung zum Codieren eines Fernsehsignals, mit

einer Einrichtung (2) zum periodischen Abtasten des Fernsehsignals zwecks Bereitstellung einer Sequenz von Abtastproben,

einem Codierer (3) zum Codieren der jeweiligen Abtastprobe zwecks Bildung eines Datenwortes und

einem Speicher (4) zum Zusammensetzen der Datenworte in Blöcke von Datenworten,

gekennzeichnet durch eine Einrichtung (6), die jeden Datenblock mit mehreren 6-Bit-Adreßworten versieht,

einen Codierer (7), der jedes 6-Bit-Adreßwort in ein entsprechendes ausgeglichenes 8-Bit-Adreßwort umsetzt,

eine Einrichtung (5), die jeden Datenblock mit mindestens einem ausgeglichenen Synchronisierwort versieht, und

einen Speicher (4), der das mindestens eine ausgeglichene Synchronisierwort und die ausgeglichenen Adreßworte mit dem entsprechenden Datenblock zusammensetzt.

**Revendications**

1. Procédé de codage d'un signal de télévision, le procédé comprenant les opérations suivantes:

échantillonner (2) le signal de télévision périodiquement afin de produire une série d'échantillons;

coder (3) chaque dit échantillon afin de former un mot de données; et

assembler (4) lesdits mots de données en blocs de mots de données;

caractérisé en ce qu'il consiste à:

produire (6) pour chaque bloc de données plusieurs mots d'adressage de 6 bits;

transformer (7) chaque mot d'adressage de 6 bits en un mot d'adressage de 8 bits équilibré respectif;

prévoir (5) pour chaque bloc de données au moins un mot de synchronisation équilibré; et

assembler (4) ledit ou lesdits mots de synchronisation équilibrés et lesdits mots d'adressage équilibrés avec ledit bloc de données respectif.

2. Procédé selon la revendication 1, où il existe quatre dits mots d'adressage et deux dits mots de synchronisation, chaque dit mot de synchronisation étant un mot de 8 bits équilibré qui n'est pas inclu parmi ceux utilisés lors de la transformation de chaque mot d'adressage de 6 bits en un mot d'adressage de 8 bits équilibré respectif.

3. Procédé selon la revendication 2, où lesdits deux mots de synchronisation ne sont pas identiques.

4. Procédé selon l'une quelconque des revendications précédentes, où lesdits mots d'adressage comprennent des nombres de blocs et de lignes de balayage de télévision et un code de contrôle.

5. Appareil permettant de coder un signal de télévision, l'appareil comprenant:

un moyen (2) servant à échantillonner le signal de télévision périodiquement afin de produire une série d'échantillons;

un codeur (3) servant à coder chaque échantillon afin de former un mot de données; et

une mémoire (4) servant à assembler lesdits mots de données en blocs de mots de données;

caractérisé par:

un moyen (6) permettant de doter chaque bloc de données de plusieurs mots d'adressage de 6 bits;

un codeur (7) servant à transformer chaque mot d'adressage de 6 bits en un mot d'adressage de 8 bits équilibré respectif;

un moyen (5) permettant de doter chaque bloc de données d'au moins un mot de synchronisation équilibré; et

une mémoire (4) servant à assembler ledit ou lesdits mots de synchronisation équilibrés et lesdits mots d'adressage équilibrés avec ledit bloc de données.

0 072 635

FIG. 1

FIG. 3

| INPUT (6 BITS) | | OUTPUT (8 BITS) | | INPUT (6 BITS) | | OUTPUT (8 BITS) | |
|---|---|---|---|---|---|---|---|
| DEC | MSB … LSB | MSB … LSB | | DEC | MSB … LSB | MSB … LSB | |
| 0 | 0 0 0 0 0 0 | 0 0 0 0 1 1 1 1 | | 32 | 1 0 0 0 0 0 | 1 0 0 0 1 1 1 1 | |
| 1 | 0 0 0 0 0 1 | 0 0 0 0 1 1 1 | | 33 | 1 0 0 0 0 1 | 1 0 0 0 1 1 1 | |
| 2 | 0 0 0 0 1 0 | 0 0 0 0 1 1 0 1 | | 34 | 1 0 0 0 1 0 | 1 0 0 0 1 1 0 1 | |
| 3 | 0 0 0 0 1 1 | 0 0 0 0 1 1 0 | | 35 | 1 0 0 0 1 1 | 1 0 0 0 1 1 0 | |
| 4 | 0 0 0 1 0 0 | 0 0 0 0 1 0 0 | | 36 | 1 0 0 1 0 0 | 1 0 0 0 1 0 0 1 | |
| 5 | 0 0 0 1 0 1 | 0 0 0 1 0 0 1 1 | | 37 | 1 0 0 1 0 1 | 1 0 0 0 1 0 1 | |
| 6 | 0 0 0 1 1 0 | 0 0 0 1 0 1 1 | | 38 | 1 0 0 1 1 0 | 1 0 0 0 1 0 1 0 | |
| 7 | 0 0 0 1 1 1 | 0 0 0 1 0 1 0 | | 39 | 1 0 0 1 1 1 | 1 0 0 0 1 0 1 0 | |
| 8 | 0 0 1 0 0 0 | 0 0 0 1 1 1 1 | | 40 | 1 0 1 0 0 0 | 1 0 0 1 0 0 1 1 | |
| 9 | 0 0 1 0 0 1 | 0 0 0 1 0 0 1 | | 41 | 1 0 1 0 0 1 | 1 0 0 1 0 0 1 | |
| 10 | 0 0 1 0 1 0 | 0 0 0 1 0 1 0 | | 42 | 1 0 1 0 1 0 | 1 0 0 1 0 1 0 | |
| 11 | 0 0 1 0 1 1 | 0 0 0 1 0 1 0 | | 43 | 1 0 1 0 1 1 | 1 0 0 1 0 1 0 | |
| 12 | 0 0 1 1 0 0 | 0 0 0 1 0 0 1 | | 44 | 1 0 1 1 0 0 | 1 0 0 1 0 1 0 0 | |
| 13 | 0 0 1 1 0 1 | 0 0 0 1 0 1 0 0 | | 45 | 1 0 1 1 0 1 | 1 0 0 1 0 1 0 | |
| 14 | 0 0 1 1 1 0 | 0 0 0 1 1 0 0 | | 46 | 1 0 1 1 1 0 | 1 0 0 1 0 0 0 | |
| 15 | 0 0 1 1 1 1 | 0 0 0 1 1 0 1 0 | | 47 | 1 0 1 1 1 1 | 1 0 0 1 0 0 0 | |
| 16 | 0 1 0 0 0 0 | 0 0 1 0 0 0 1 0 | | 48 | 1 1 0 0 0 0 | 1 0 1 0 0 0 1 0 | |
| 17 | 0 1 0 0 0 1 | 0 0 1 0 0 0 1 0 | | 49 | 1 1 0 0 0 1 | 1 0 0 0 0 0 1 0 | |
| 18 | 0 1 0 0 1 0 | 0 0 1 0 0 1 1 | | 50 | 1 1 0 0 1 0 | 1 0 0 0 0 0 1 1 | |
| 19 | 0 1 0 0 1 1 | 0 0 1 0 0 0 1 | | 51 | 1 1 0 0 1 1 | 1 0 0 0 0 0 1 0 | |
| 20 | 0 1 0 1 0 0 | 0 0 1 0 0 1 0 | | 52 | 1 1 0 1 0 0 | 1 0 0 0 0 1 0 1 | |
| 21 | 0 1 0 1 0 1 | 0 0 1 0 1 0 0 0 | | 53 | 1 1 0 1 0 1 | 1 0 0 0 0 1 0 1 | |
| 22 | 0 1 0 1 1 0 | 0 0 1 0 1 0 0 | | 54 | 1 1 0 1 1 0 | 1 0 0 0 0 1 0 0 | |
| 23 | 0 1 0 1 1 1 | 0 0 1 0 0 1 0 | | 55 | 1 1 0 1 1 1 | 1 0 0 0 0 1 0 1 | |
| 24 | 0 1 1 0 0 0 | 0 0 1 1 0 0 1 0 | | 56 | 1 1 1 0 0 0 | 1 0 0 0 0 1 0 0 | |
| 25 | 0 1 1 0 0 1 | 0 0 1 1 0 0 1 0 | | 57 | 1 1 1 0 0 1 | 1 0 0 0 1 0 0 0 | |
| 26 | 0 1 1 0 1 0 | 0 0 1 1 0 1 0 | | 58 | 1 1 1 0 1 0 | 1 0 0 1 0 0 0 | |
| 27 | 0 1 1 0 1 1 | 0 0 1 1 1 0 0 0 | | 59 | 1 1 1 0 1 1 | 1 0 1 0 0 0 0 | |
| 28 | 0 1 1 1 0 0 | 0 0 1 1 1 0 0 1 | | 60 | 1 1 1 1 0 0 | 1 1 0 0 0 0 0 | |
| 29 | 0 1 1 1 0 1 | 0 0 1 1 1 0 1 0 | | 61 | 1 1 1 1 0 1 | 1 0 0 1 0 0 0 | |
| 30 | 0 1 1 1 1 0 | 0 0 1 1 1 1 0 0 | | 62 | 1 1 1 1 1 0 | 1 0 1 0 0 0 0 | |
| 31 | 0 1 1 1 1 1 | 0 0 1 1 1 1 0 0 | | 63 | 1 1 1 1 1 1 | 1 1 1 0 0 0 0 0 | |

## FIG. 2